(19) Europäisches Patentamt
European Patent Office
Office européen des brevets

(11) **EP 1 623 286 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(21) Anmeldenummer: **04727283.6**

(22) Anmeldetag: **14.04.2004**

(51) Int Cl.:
***G05B 19/18*** *(2006.01)*

(86) Internationale Anmeldenummer:
**PCT/EP2004/003929**

(87) Internationale Veröffentlichungsnummer:
**WO 2004/099888 (18.11.2004 Gazette 2004/47)**

(54) **EXTRUSIONSANLAGE MIT SYNCHRONISIERTEN ANTRIEBSAGGREGATEN UND VERFAHREN ZUR SYNCHRONISIERUNG VON ANTRIEBEN**

EXTRUSION PLANT PROVIDED WITH SYNCHRONISED DRIVE UNITS AND METHOD FOR SYNCHRONISING DRIVES

INSTALLATION D'EXTRUSION A ORGANES D'ENTRAINEMENT SYNCHRONISES ET PROCEDE POUR SYNCHRONISER DES ENTRAINEMENTS

(84) Benannte Vertragsstaaten:
**AT BE BG CH CY CZ DE DK EE ES FI FR GB GR HU IE IT LI LU MC NL PL PT RO SE SI SK TR**

(30) Priorität: **07.05.2003 DE 10320179**
**18.06.2003 DE 10327397**

(43) Veröffentlichungstag der Anmeldung:
**08.02.2006 Patentblatt 2006/06**

(73) Patentinhaber: **Krauss Maffei GmbH**
**80997 München (DE)**

(72) Erfinder:
• **LABERER, Roman**
**85247 Oberroth (DE)**
• **BAUMER, Stefan**
**85354 Freising (DE)**

(74) Vertreter: **Harrasz, Julia Konstanze**
**mannesmann plastics machinery GmbH**
**Patentabteilung TS**
**Krauss-Maffei-Strasse 2**
**80997 München (DE)**

(56) Entgegenhaltungen:
**DE-A- 19 859 348          US-A- 5 037 252**

# EP 1 623 286 B1

**Beschreibung**

Die Erfindung bezieht sich auf eine Extrusionsanlage mit mehreren Antriebsaggregaten, deren Geschwindigkeiten synchronisiert werden, sowie auf ein Verfahren zur Synchronisierung von Antriebsaggregaten.

Extrusionsanlagen dienen zum Strangpressen von Thermoplasten. Dazu wird ein thermoplastischer Rohstoff als Granulat oder Pulver durch eine Dosiervorrichtung in eine Förderschnecke gegeben, in der das Material homogenisiert und thermisch plastifiziert wird. Das plastifizierte Material wird von der Schnecke durch ein formgebendes Werkzeug gepresst und der erhaltene Strang wird von einer Abzugsvorrichtung durch Kühlvorrichtungen abgezogen. Dieses Verfahren eignet sich zur Herstellung von Profilleisten, Rohren, Platten und ähnlichem. Die Aggregate einer Extrusionsanlage, die auch aus mehreren Extrudereinheiten bestehen kann, werden meist zentral gesteuert.

Für eine gleichbleibende Produktqualität ist es bei der Geschwindigkeitsverstellung von Extrusionsanlagen wichtig, daß die Geschwindigkeiten aller Antriebsaggregate, zum Beispiel der Plastifizierschnecke, der Dosiervorrichtung und des Abzugs, synchron verstellt werden. Bei bekannten Verfahren zur Synchronisierung wird die Geschwindigkeitsänderung eines Aggregats verhältnismäßig auf die anderen Aggregate übertragen. Bei häufigen Geschwindigkeitsverstellungen führt dieses Verfahren jedoch aufgrund numerischer Rechenungenauigkeiten zu einem Auseinanderdriften der Antriebsgeschwindigkeiten. Bei anderen Verfahren kann eine Synchronisierung erst ab einer bestimmten Mindestgeschwindigkeit vorgenommen werden, da es andernfalls zu einer ungenauen Berechnung der Koppelfaktoren zwischen den einzelnen Antriebsaggregaten kommen kann. Die Synchronisierung kann daher nicht ständig aktiv sein, wenn zwischenzeitlich die Geschwindigkeit unter die Minimalgeschwindigkeit fällt, und muß zudem manuell aktiviert werden.

Aus der US 5,037,252 ist ein Verfahren zur Synchronisierung von Antriebsaggregaten bekannt, bei dem Änderungen der Geschwindigkeitsverhältnisse zwischen den Aggregaten durch Änderung von Multiplikatoren bewirkt werden. Der Geschwindigkeits-Sollwert eines jeden Antriebsaggregats wird mit einem Faktor multipliziert, derart dass sich die gewünschten Geschwindigkeitverhältnisse ergeben.

Die DE 198 59 348 A1 zeigt ein Steuer- und Regelverfahren für eine Extrusionsmaschine sowie eine entsprechende Extrusionsmaschine. Die Extrusionsmaschine weist Elektromotoren auf, die mittels Frequenzumrichtern derart ansteuerbar sind, dass die Bahngeschwindig keiten der Abzugsketten im wesentlichen gleich sind.

Aus der DE 196 51427 A1 ist ein Verfahren zur lage- oder winkelsynchronen Steuerung von verketteten Antriebssystemen sowie eine Vorrichtung zur Durchführung des Verfahrens bekannt. Einzelantriebe sind hierbei zu Antriebsgruppen zusammengefasst und werden über Taktsignale in Form von inkrementalen oder codierten Kommandosignalen gesteuert.

Der Erfindung liegt die Aufgabe zugrunde, ein Verfahren zur Synchronisierung von Antriebsaggregaten und eine Extrusionsanlage mit synchronisierten Antriebsaggregaten zu schaffen, die eine dauerhafte Synchronisierung im gesamten Geschwindigkeitsbereich ermöglichen.

Die Lösung dieser Aufgabe erfolgt durch ein Verfahren gemäß Anspruch 1 und einer Extrusionsanlage gemäß Anspruch 6. Die weiteren Patentansprüche betreffen vorteilhafte Weiterentwicklungen der Erfindung.

Erfindungsgemäß wird der Sollwert der Geschwindigkeit eines Antriebsaggregats aus dem Produkt der Maximalgeschwindigkeit des Aggregats, einem Aggregat-abhängigen Verhältniswert und einem für alle Aggregate gleichen Synchronisationsfaktor erhalten.

$$\text{Sollwert} = \text{Synchronisationsfaktor} \cdot \text{Verhältniswert} \cdot \text{Maximalgeschwindigkeit}$$

Durch den Verhättniswert werden die relativen Geschwindigkeiten der einzelnen Antriebsaggregate zueinander festgelegt. Bei synchronen Geschwindigkeitsänderungen wird der Synchronisationsfaktor verändert, während die Verhältniswerte gleich bleiben, so daß durch Änderung des Synchronisationsfaktors von 0 bis zum Maximalwert die Geschwindigkeit der Aggregate vom Stillstand bis zu einer Maximalgeschwindigkeit verstellt werden kann. Zur Änderung der Geschwindigkeitsverhältnisse zwischen den einzelnen Aggregaten werden ein oder mehrere Verhältniswerte verstellt. Die Synchronisierung ist in jedem Betriebspunkt möglich.

Bevorzugte Ausführungsbeispiele der Erfindung werden anhand der beigefügten Zeichnungen erläutert.

Fig. 1 zeigt eine Extrusionsanlage und

Fig. 2 zeigt ein v-t-Diagramm mit Geschwindigkeiten verschiedener Aggregate über der Zeit.

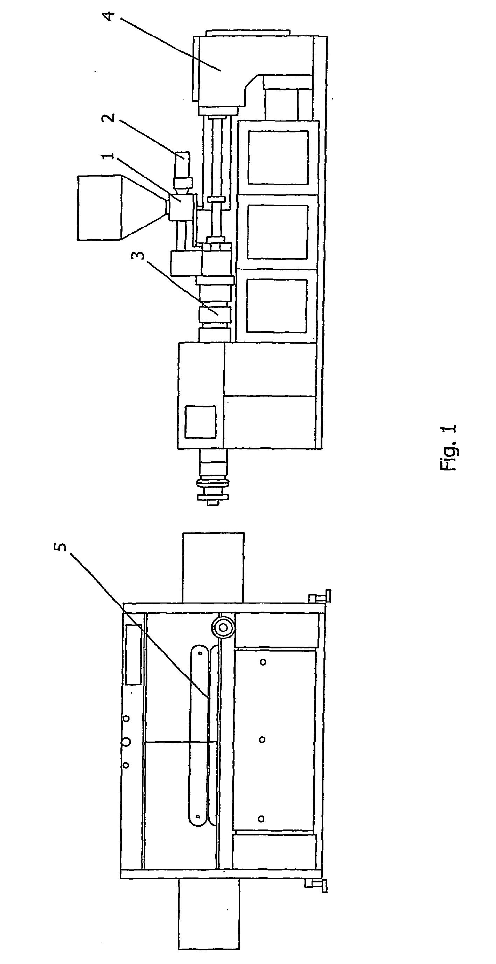

Fig. 1 zeigt den an sich bekannten Aufbau einer Extrusionsanlage mit Dosiervorrichtung 1, Dosierantriebsaggregat 2, Extruderschnecke 3, Schneckenantriebsaggregat 4, Abzug 5 und Antriebsaggregat des Abzugs (nicht gezeigt).

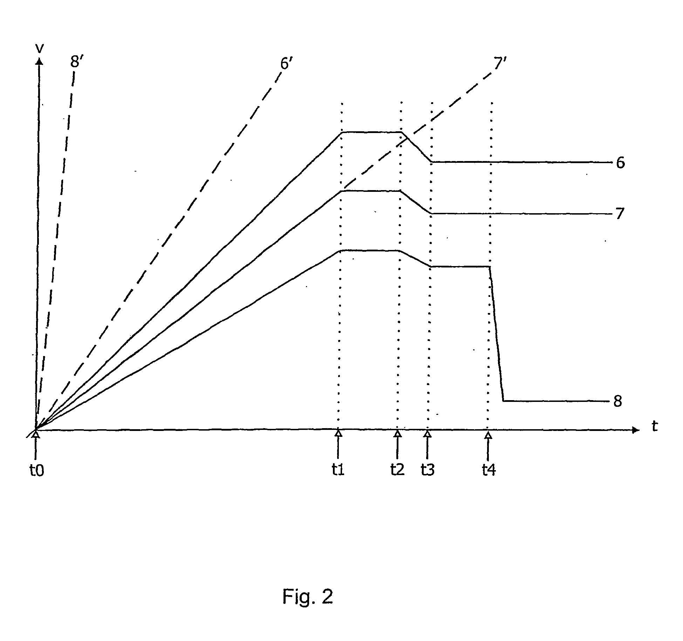

Fig. 2 zeigt die Geschwindigkeiten von Antriebsaggregaten in Abhängigkeit von der Zeit. Dabei repräsentieren die Kurve 6 die Geschwindigkeit der Dosiervorrichtung 1, die Kurve 7 die Geschwindigkeit der Schnecke 3 und die Kurve 8 die Geschwindigkeit des Abzugs 5. Bei einem Zeitpunkt t0 wird die Anlage gestartet. Zu diesem Zeitpunkt ist der Synchronisationsfaktor auf 0 gesetzt, so daß die Geschwindigkeiten aller Aggregate bei 0 liegen. Die gewünschten Sollwerte der Geschwindigkeiten der Antriebsaggregate seien die Werte, die in einem Zeitraum t1 bis t2 vorliegen. Um diese gewünschten Geschwindigkeiten zu erreichen, werden in dem Zeitraum ab Produktionsstart (t0) die Ausgabewerte der einzelnen Antriebsaggregate kontinuierlich erhöht, bis zum Zeitpunkt t1 die gewünschten Sollwerte erreicht werden. Dazu wird der Synchronisationsfaktor kontinuierlich beginnend mit 0 erhöht, bis der gewünschte Sollwert erreicht ist. Da die Antriebsaggregate üblicherweise verschiedene maximale Geschwindigkeitsänderungen erlauben, die in Fig. 2 durch die gestrichelten Geraden 6', 7' und 8' für die Dosiervorrichtung 1, die Schnecke 3 bzw. den Abzug 5 gezeigt sind, wird als Änderungsgeschwindigkeit die maximale Änderungsgeschwindigkeit des trägsten Aggregats, im gezeigten Fall der Schnecke 3, verwendet.

Zum Zeitpunkt t1 ist die gewünschte Sollgeschwindigkeit erreicht und wird bis zum Zeitpunkt t2 beibehalten. Zu einem Zeitpunkt t2 findet eine synchrone Geschwindigkeitsverstellung statt, worauf im Zeitraum von t2 bis t3 die Geschwindigkeiten der Antriebsaggregate synchron gesenkt werden, bis zum Zeitpunkt t3 die gewünschten Sollwerte erreicht werden. Auch in diesem Fall richtet sich die Änderungsgeschwindigkeit wieder nach der maximalen Änderungsgeschwindigkeit des trägsten Aggregats, in diesem Fall der Schnecke 3. Im Zeitraum t3 bis t4 werden die Geschwindigkeiten wiederum konstant gehalten, bis zum Zeitpunkt t4 eine nichtsynchrone Geschwindigkeitsverstellung des Antriebsaggregats des Abzugs stattfindet, woraufhin die Abzugsgeschwindigkeit verringert wird, bis der neue Sollwert erreicht wird, während die Geschwindigkeiten der Dosiervorrichtung 1 und der Schnecke 3 konstant gehalten werden. Diese nichtsynchrone Geschwindigkeitsverstellung erfolgt, indem der Verhältniswert des Antriebsaggregats des Abzugs verringert wird, wobei in diesem Fall die Änderungsgeschwindigkeit des Ausgabewerts bis zum Erreichen des neuen Sollwerts durch die maximale Änderungsgeschwindigkeit des Einzelaggregats, in diesem Fall des Abzugs 5, bestimmt wird.

Bevorzugt wird der höchste Verhältniswert auf einen Maximalwert normiert, der nicht überschritten werden kann, wodurch alle anderen Aggregate einen niedrigeren Verhältniswert erhalten. Dadurch wird eine maximale Rechengenauigkeit erreicht und zugleich ein Überlauf des Verhältniswerts ausgeschlossen. Das zugehörige Aggregat wird als Leitaggregat bezeichnet. Wenn der Synchronisationsfaktor auf den Maximalwert gesetzt wird, erreicht das Leitaggregat seine maximale Geschwindigkeit, während die anderen Aggregate mit niedrigeren Verhältniswerten unter ihren Maximalgeschwindigkeiten bleiben. Die normierte Formel lautet:

$$Sollwert = \frac{Synchronisationsfaktor}{maximaler\ Synchronisationsfaktor} \cdot \frac{Verhältniswert}{maxmaler\ Verhältniswert} \cdot Maximalgeschwindigkeit$$

Für eine synchrone Geschwindigkeitsänderung gibt der Benutzer einen neuen Sollwert für ein Aggregat an, woraus ein neuer Synchronisationsfaktor berechnet wird, der dann auf alle Aggregate angewendet wird, so daß sich für alle Aggregate neue Sollwerte ergeben. Bei einer nichtsynchronen Einzeländerung wird aus dem gewünschten neuen Sollwert ein neuer Verhältniswert berechnet, während alle anderen Werte konstant bleiben.

In der Praxis kann das Verfahren mit an sich bekannten Sensoren für Geschwindigkeiten etc. und einer programmierbaren Steuer- und Bedieneinheit realisiert werden. Selbstverständlich läßt sich das beschriebene Verfahren auch auf Anlagen mit anderen bzw. weiteren Aggregaten anwenden.

**Patentansprüche**

1. Verfahren zur Synchronisierung von Antriebsaggregaten, **dadurch gekennzeichnet, daß** die Sollwerte der jeweiligen Aggregatgeschwindigkeiten das Produkt aus jeweiliger Maximalgeschwindigkeit des Aggregats, jeweiligem Verhältniswert und einem für alle Aggregate gleichen Synchronisationsfaktor sind, synchrone Geschwindigkeitsänderungen der Aggregate durch Veränderung des Synchronisationsfaktors bewirkt werden und Änderungen der Geschwindigkeitsverhältnisse zwischen den Aggregaten durch Änderungen der jeweiligen Verhältniswerte bewirkt werden.

2. Verfahren nach Anspruch 1, **dadurch gekennzeichnet, dass** der höchste Verhältniswert aller Aggregate auf einen nicht überschreitbaren Maximalwert normiert wird.

**3.** Verfahren nach Anspruch 1 oder 2, **dadurch gekennzeichnet, dass** nach Änderung eines Sollwerts ein Ausgabewert mit einer vorgegebenen Änderungsgeschwindigkeit bis zum Erreichen des neuen Sollwerts nachgeführt wird.

**4.** Verfahren nach Anspruch 3, **dadurch gekennzeichnet, dass** die vorgegebene Änderungsgeschwindigkeit bei synchronen Geschwindigkeitsveränderungen durch die langsamste Maximaländerungsgeschwindigkeit aller Aggregate bestimmt wird.

**5.** Verfahren nach Anspruch 3, **dadurch gekennzeichnet, dass** die vorgegebene Änderungsgeschwindigkeit bei Änderung des Sollwerts eines einzelnen Aggregats die Maximaländerungsgeschwindigkeit dieses Aggregats ist.

**6.** Extrusionsanlage mit mehreren Antriebsaggregaten, **dadurch gekennzeichnet, daß** die Sollwerte der jeweiligen Aggregatgeschwindigkeiten das Produkt aus jeweiliger Maximalgeschwindigkeit des Aggregats, jeweiligem Verhältniswert und einem für alle Aggregate gleichen Synchronisationsfaktor sind, synchrone Geschwindigkeitsänderungen der Aggregate durch Veränderung des Synchronisationsfaktors bewirkt werden, und
Änderungen der Geschwindigkeitsverhältnisse zwischen den Aggregaten durch Änderungen der jeweiligen Verhältniswerte bewirkt werden.

**7.** Extrusionsanlage nach Anspruch 6, **dadurch gekennzeichnet, dass** der höchste Verhältniswert aller Aggregate auf einen nicht überschreitbaren Maximalwert normiert wird.

**8.** Extrusionsanlage nach Anspruch 6 oder 7, **dadurch gekennzeichnet, dass** nach Änderung eines Sollwerts ein Ausgabewert mit einer vorgegebenen Änderungsgeschwindigkeit bis zum Erreichen des neuen Sollwerts nachgeführt wird.

**9.** Extrusionsanlage nach Anspruch 8, **dadurch gekennzeichnet, dass** die vorgegebene Änderungsgeschwindigkeit bei synchronen Geschwindigkeitsveränderungen durch die langsamste Maximaländerungsgeschwindigkeit aller Aggregate bestimmt ist.

**10.** Extrusionsanlage nach Anspruch 8, **dadurch gekennzeichnet, dass** die vorgegebene Änderungsgeschwindigkeit bei Änderung des Sollwerts eines einzelnen Aggregats die Maximaländerungsgeschwindigkeit dieses Aggregats ist.

**Claims**

**1.** A method for synchronising drive units, **characterised in that** the target values of the respective unit speeds are the product of the respective maximum speed of the unit, the respective ratio value and a synchronisation factor which is the same for all the units,
synchronous speed changes of the units are effected by modifying the synchronisation factor and
changes in the speed ratios between the units are effected by modifying the respective ratio values.

**2.** The method according to claim 1, **characterised in that** the highest ratio value of all the units is normalised to a maximum value which cannot be exceeded.

**3.** The method according to claim 1 or 2, **characterised in that** after changing a target value, an output value with a predefined speed change is tracked until the new target value has been reached.

**4.** The method according to claim 3, **characterised in that** the predefined speed change for synchronous speed changes is determined by the slowest maximum speed change of all the units.

**5.** The method according to claim 3, **characterised in that** the predefined speed change when changing the target value of a single drive unit is the maximum speed change of said unit.

**6.** An extrusion plant comprising a plurality of drive units, **characterised in that** the target values of the respective unit speeds are the product of the respective maximum speed of the unit, the respective ratio value and a synchronisation factor which is the same for all the units,
synchronous speed changes of the units are effected by changing the synchronisation factor and
changes in the speed ratios between the units are effected by modifying the respective ratio values.

**7.** The extrusion plant according to claim 6, **characterised in that** the highest ratio value of all the units is normalised to a maximum value which cannot be exceeded.

**8.** The extrusion plant according to claim 6 or 7, **characterised in that** after changing a target value, an output value with a predefined speed change is tracked until the new target value has been reached.

**9.** The extrusion plant according to claim 8, **characterised in that** the predefined speed change for synchronous speed changes is determined by the slowest maximum speed change of all the units.

**10.** The extrusion plant according to claim 8, **characterised in that** the predefined speed change, when changing the target value of a single drive unit, is the maximum speed change of said unit.

**Revendications**

**1.** Procédé de synchronisation d'agrégats de transmission, **caractérisé en ce que** les valeurs théoriques des vitesses respectives des agrégats sont le produit de
la vitesse maximale respective de l'agrégat, de la valeur respective du rapport et d'un facteur de synchronisation identique pour tous les agrégats,
que les changements synchrones de vitesse des agrégats sont provoqués par le changement du facteur de synchronisation et
que les changements des rapports de vitesse entre les agrégats sont provoqués par des changements des valeurs respectives des rapports.

**2.** Procédé selon la revendication 1, **caractérisé en ce que** la valeur de rapport la plus élevée de tous les agrégats est normalisée sur une valeur maximale ne pouvant être dépassée.

**3.** Procédé selon la revendication 1 ou 2, **caractérisé en ce qu'**après changement d'une valeur théorique, une valeur d'édition est poursuivie à une vitesse de changement prescrite jusqu'à atteinte de la nouvelle valeur théorique.

**4.** Procédé selon la revendication 3, **caractérisé en ce que** la vitesse de changement prescrite en cas de changements synchrones de vitesse est définie par la vitesse maximale de changement la plus lente de tous les agrégats.

**5.** Procédé selon la revendication 3, **caractérisé en ce que** la vitesse de changement prescrite en cas de changement de valeur théorique d'un agrégat distinct est la vitesse maximale de changement de cet agrégat.

**6.** Installation d'extrusion comportant plusieurs agrégats de transmission, **caractérisée en ce que** les valeurs théoriques des vitesses respectives des agrégats sont le produit de la vitesse maximale respective de l'agrégat, de la valeur respective du rapport et d'un facteur de synchronisation identique pour tous les agrégats,
les changements synchrones de vitesse des agrégats sont provoqués par le changement du facteur de synchronisation et
que les changements des rapports de vitesse entre les agrégats sont provoqués par des changements des valeurs respectives des rapports.

**7.** Installation d'extrusion selon la revendication 6, **caractérisée en ce que** la valeur de rapport la plus élevée de tous les agrégats est normalisée sur une valeur maximale ne pouvant être dépassée.

**8.** Installation d'extrusion selon la revendication 6 ou 7, **caractérisée en ce qu'**après changement d'une valeur théorique, une valeur d'édition est poursuivie à une vitesse de changement prescrite jusqu'à atteinte de la nouvelle valeur théorique.

**9.** Installation d'extrusion selon la revendication 8, **caractérisée en ce que** la vitesse de changement prescrite en cas de changements synchrones de vitesse est définie par la vitesse maximale de changement la plus lente de tous les agrégats.

**10.** Installation d'extrusion selon la revendication 8, **caractérisée en ce que** la vitesse de changement prescrite en cas de changement de valeur théorique d'un agrégat distinct est la vitesse maximale de changement de cet agrégat.

EP 1 623 286 B1

Fig. 1

6

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5037252 A
- DE 19859348 A1
- DE 19651427 A1